Europäisches Patentamt

European Patent Office

Office européen des brevets

(19)

(11) Veröffentlichungsnummer: **0 156 013**
**B1**

(12) **EUROPÄISCHE PATENTSCHRIFT**

(45) Veröffentlichungstag der Patentschrift: **24.10.90**

(21) Anmeldenummer: **84115173.1**

(22) Anmeldetag: **11.12.84**

(51) Int. Cl.⁵: **H 02 K 41/03**, B 60 L 13/00

(54) Erregeranordnung für einen Langstatorantrieb.

(30) Priorität: **20.03.84 DE 3410119**

(43) Veröffentlichungstag der Anmeldung:
**02.10.85 Patentblatt 85/40**

(45) Bekanntmachung des Hinweises auf die
Patenterteilung:
**24.10.90 Patentblatt 90/43**

(84) Benannte Vertragsstaaten:
**DE FR GB IT**

(56) Entgegenhaltungen:
DE-A-3 041 940

ELEKTROTECHNIK UND MASCHINENBAU,
Band 98, Nr. 11, November 1981, Seiten 458-465,
Wien, AU; H. WEH "Elektrische Linearantriebe
für die Transporttechnik"

I.E.E.E., Band MAG-15, Nr. 6, November 1979,
Seiten 1422-1427, New York, US; H. WEH
"Linear synchronous motor development for
urband and rapid transit systems"

(73) Patentinhaber: **THYSSEN INDUSTRIE AG**
**Am Thyssenhaus 1**
**D-4300 Essen 1 (DE)**

(72) Erfinder: **Holzinger, Gerhard, Dipl.-Ing.**
**Dresdner Strasse 74**
**D-8000 München 50 (DE)**
Erfinder: **Meins, Jürgen, Dr. Dipl.-Ing.**
**Alte Poststrasse 18c**
**D-8011 Baldham (DE)**
Erfinder: **Miller, Luitpold, Ing. grad.**
**An der Ottosäule 5**
**D-8012 Ottobrunn (DE)**

(74) Vertreter: **Freiherr von Schorlemer, Reinfried,**
**Dipl.-Phys.**
**Patentanwalt Brüder-Grimm-Platz 4**
**D-3500 Kassel (DE)**

(56) Entgegenhaltungen:
ETR, Band 31, Nr. 11, November 1982, Seiten
855-858; DEUTSCHE EISENBAHN CONSULTING
et al.: " Geregelte, permanenterregte
Tragmagnete für Magnetschnellbahnen"

**Beschreibung**

Die Erfindung betrifft eine Erregeranordnung nach dem Oberbegriff des Anspruchs 1.

Bei einer bekannten, rein elektromagnetischen Erregeranordnung (DE—OS 30 41 940) dieser Art für Schnellverkehrsmagnetschwebefahrzeuge besteht jeder Magnet aus einem durchgehenden Magnetrücken, von dem Polschäfte ausgehen, die an ihren Enden verbreiterte Polschuhe tragen, so daß sich insgesamt ein kammförmiger Querschnitt ergibt. In den zwischen den Polschäften verbleibenden Nuten sid die vorgefertigten Magnetspulen angeordnet, die auf gesonderte Wickelkörper gewickelt sind und jeweils als Formspulen in die Magnete eingebaut sind. Weil dadurch der Nutquerschnitt nicht vollständig ausgefüllt ist, ergibt sich ein ungünstiger Füllfaktor. Die Anordnung insgesamt führt zu vergleichsweise großen Magnetgewichten, durch welche die dynamischen Eigenschaften der Schwebebahn ungünstig beeinflußt werden.

Daneben sind Erregeranordnungen bekannt ("Elektrotechnik und Maschinenbau", Bd. 98, Nr. 11, November 1981, S. 458—465; "I.I.EE., Band MAG—15, Nr. 6, November 1979, S. 1422—1427; ETR, Bad. 31, Nr. 11, November 1982, S. 855—858), die sich vom Prinzip her dadurch von den Anordnungen de eingangs bezeichneten Gattung unterscheiden, daß die Haupttragkraft durch Permanentmagnete erzugt wird, denen zusätzliche Steuerwicklungen zugeordnet sind. Auch bei diesen Erregeranordnungen wird, was den elektromagnetischen Teil angeht, der bekannte, kammartige Querschnitt des Magneten beibehalten. Die Permanentmagnete sind senkrecht unterhalb der Nuten angeordnet und mit Hilfe zusätzlicher, keilförmiger Eisenteile mit dem Magnetrücken verbunden.

Aufgabe der Erfindung ist es daher, bei einer Erregeranordnungen der eingangs bezeichneten Gattung das als ungefederte Masse zu betrachtende Magnetgewicht zu reduzieren und Streuflüsse zu vermeiden, um die dynamischen Eigenschaften zu verbessern. Dabei soll die Tragkraft des Magneten nicht verschlechtert werden.

Zur Lösung dieser Aufgabe sind erfindungsgemäß die kennzeichnenden Merkmale des Anspruchs 1 vorgesehen.

Die erfindungsgemäße, mäanderförmige Anordnung ermöglicht es, den verfügbaren Nutenquerschnitt vollständig mit dem Magnetspulenmaterial auszufüllen. Das kann zwar zu einer etwas größeren Bauhöhe des Magneten führen. Das Magnetgewicht läßt sich jedoch dadurch reduzieren, daß unterhalb des Pole eine oder mehrere sich parallel zu den Nuten erstrekkende Ausnehmungen angeordnet werden. Das hat außerdem den Vorteil, daß die mittlere Eisenweglange des magnetischen Kreises unterhalb des Polebene verkürzt und dadurch der magnetische Spannungsabfall im Eisenkreis verringert wird.

Nach der Erfindung sollen die Leiter der Magnetspulen aus Bändern bestehen, deren Bandbreite der Tiefe der Nut entspricht. Diese Bänder können direkt um die zwischen benachbarten Nuten gebildeten Pole bzw. Polschäfte gewickelt werden. Dadurch wird der Füllfaktor erhöht und die Spulenhöhe gegenüber bekannten, mit Polschuhen ausgerüsteten Magneten vergrößert. Ferner wird durch direkten nur elektrisch isolierten Kontakt der Magnetspule mit dem Polschaft der thermische Übergangswiderstand zwischen Magnetspule und Polschaft verringert, so daß ein wesentlicher Anteil der in der Magnetspule entstehenden Verlustleitung über das Magneteisen abgeführt werden kann. Da die maximal zulässige Magnetspulentemperatur auch ein Auslegungskriterium für die zulässige Stromdichte is, kann bei verbesserter Wärmeableitung die Stromdichte erhöht werden.

Die gewichtssparenden Ausnehmungen werden zweckmäßig so unter den Polen des Magneten angeordnet, daß sie bis in den Polschaft hineinreichen.

Bedingt duch die Wechselpolanordnung sind die Endpole eines Magneten als Halbpol ausgebildet. Der Raum zwischen benachbarten Enden zweier Magnete entspricht, abhanging von einer gewählten Polverstimmung, etwa einer Statorpolteilung. Zur Vermeidung von Überschneidungen des Spulenraums von Magnetspulen an den Endpolen benachbarter Magnete ist es günstig, wenn dike Leiter der Magnetspulen an den Endpolen jedes Magneten um den Magnetrücken gewickelt sind. Zusätzlich ergibt sich bei einem Spulenhöhen-/Spulenbreitenverhältnis kleiner als 1 durch Verkürzung der mittleren Windungslänge eine Gewichtsreduzierung der Magnetspule am Endpol.

Zur berührungslosen Energieauskopplung in Schnellverkehrsmagnetschwebefahrzeugen werden Lineargeneratorwicklungen in zugeordnete Nuten auf der die Polebene bildenden Seite der Polschuhe eingelegt. Im Luftspalt zwischen Polschuh und genutetem Langstator erfolgt bei Relativbewegungen eine Modulation der Flußverteilung. Dadurch wird in den Lineargeneratorwicklungen eine Spannung induziert, die über geeignete Gleichrichterschaltungen zur teilweisen oder vollständigen Deckung des Fahrzeugenergiebedarfs herangezogen wird. Diese Lineargeneratorwicklungsstränge können vorteilhaft wenigstens teilweise in an den polseitigen Nutwandungen anageordneten Nuten verlegt sein.

Weisen derartige Erregeranordnungen auch Permanentmagnete zur Erzeugung stationärer Magnetkräfte auf, so wird die zur Erzeugung von stabilisierenden Kräften erforderliche Erregung duch zusätzliche Magnetspulen aufgebracht. Nach bevorzugter Ausführung sollen die Permanentmagnete im Magnetrücken unterhalb der Magnetspulen oder in den Polen neben den Magnetspulen angeordnet sein, so daß eine Ausbildung des Magnetpoles in der beschriebenen Weise erfolgen kann.

Bei bekannten Erregeranordnungen ist die Magnetpolteilung gegenüber der Langstatorteilung verkleinert, um durch Versatz de Magnetpole Tragkraftschwankungen des gesamten Magneten infolge der Schwankungen des magnetischen Leitwerts zwischen dem Polschuh un der genuteten Reaktionsschiene zu minimieren. Diese Abweichung führt aber zu einer Abweichung des Polwinkels zwischen Antrieb und Magnet und somit zu einer Einbuße an Schubkraft.

Die Magnetpolteilung kann aber gegenüber der Statorpolteilung auch vergrößert sein. Eine Vergrößerung der Magnetpolteilung hat bei gleichen Abweichungen des Polwinkels zwischen Antrieb und Magnet den Vorteil, daß die Pollücke verlängert wird und somit bei gegebenem Nutquerschnitt die Nuthöhe niedriger gewählt werden kann. Die Folge davon ist eine niedrigere Magnethöhe bei insgesamt verlängerten Einzelmagneten. Weiterhin nimmt auch die Polstirnstreuung ab. Damit kann aufgrund der geringeren magnetischen Belastung des Eisenkreises die Polschaftfläche kleiner gewählt werden. Auch das führt zu einer Verringerung des Magneteisengewichtes.

Zur Abführung der in den Magnetspulen entstehenden Verluste sind vorteilhaft metallische Platten zwischen den Magnetpolen und den Magnetspulen angeordnet.

Die metallischen Platten sind im Sinne einer guten thermischen Kopplung elektrisch leitend mit den Magnetspulen verbunden, und die elektrische Isolation ist zwischen der metallischen Platte und dem Magnetpol angeordnet.

Im folgenden wird ein in der Zeichnung dargestelltes Ausführungsbeispiel der Erfindung erläutert; es zeigen:

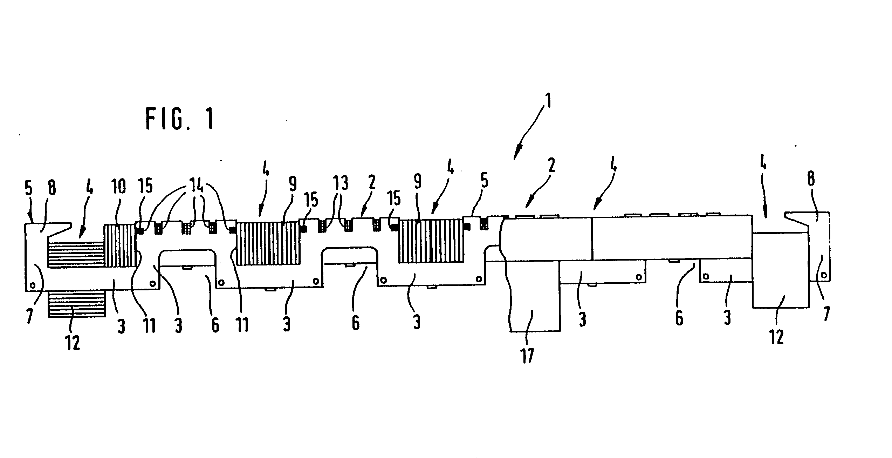

Fig. 1 in schematischer Darstellung und teilweise geschnitten einen Wechselpol-Magneten für eine Erregeranordnung eines Synchron-Langstatorantriebs,

Fig. 2 teilweise eine andere Ausführung des Gegenstandes nach Figur 1,

Fig. 3 teilweie eine weitere Ausführung des Gegenstandes nach Figur 1.

Der in der Zeichnung dargestellte Magnet 1 besitzt einen mäanderförmigen Querschnitt mit mehreren im Abstand voneinander angeordneten Polen 2, die sich in Längsrichtung eines nicht dargestellten, genuteten Langstators erstrecken. Die Pole 2 sind untereinander jeweils über einen Abschnitt eines Magnetrückens 3 vereinigt. Über den Abschnitten des Magnetruckens 3 befinden sich quer zum Magneten 1 verlaufende Nuten 4 mit rechteckigem Querschnitt, die sich jeweils bis zu der von der Oberseite des Magneten 1 gebildeten Polebene 5 erstrecken. Unter den Polen 2 befinden sich Ausnehmungen 6, die sich ebenfalls über die gesamte Breite des Magneten 1 erstrecken. In Längsrichtung wird der Magnet 1 von Endpolen mit Polschäften 7 und aufgesetzten, verlängerten Polschuhen 8 begrenzt. Die Polschuhe 8 erstrecken sich über einen Teil der benachbarten Nut 4.

In die Nuten 4 sind jeweils Magnetspulen 9 eingelegt, die aus Bändern 10 bestehen, deren Bandbreite etwa der Tiefe der Nut 4 entspricht. Die Bänder 4 sind elektrisch isoliert direkt um die Pole 2 gewickelt, — und zwar in engem Kontakt untereinander sowie zu den polseitigen Nutwandungen 11. Wie dargestellt, sind die Nuten 4 vollständig von den Magnetspulen 9 ausgefüllt.

Im Bereich der den Endolen benachbarten Nuten 4 sind Magnetspulen 12 ebenfalls aus Bändern um den zugeordneten Abschnitt des Magnetrückens 3 gewickelt.

Auf der die Polebene 5 bildenden Oberseite der Pole 2 befinden sich kleinere Nuten 13 zur Aufnahme von Lineargeneratorwicklungssträngen 14. Weitere Lineargeneratorwicklungsstränge 14 sind in Nuten 15 untergebracht, die in die nutseitigen Polwandungen eingelassen sind.

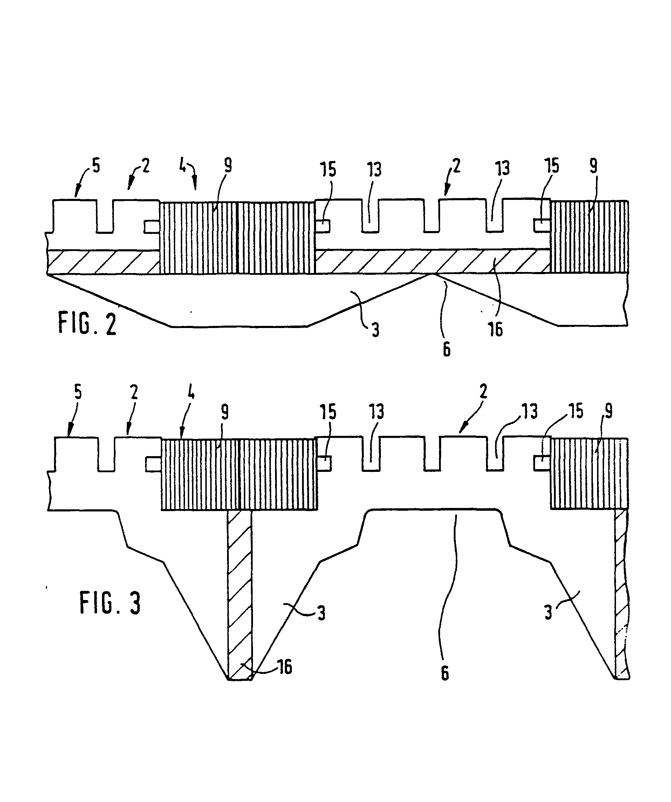

In den Figuren 2 und 3 ist zusätzlich die Anordnung von Permanentmagneten 16 dargestellt, die bei de Ausführung nach Figur 2 unter den Polen 2 und bei der Ausführung nach Figur 3 unter den Nuten 4 angeordnet sind. Die Permanentmagnete werden von den Magnetspulen 9 erregt.

Nicht dargestellt iist, daß die bei gegenüber dem Langstator zur Unterdrückung des Nutungseinflusses erforderliche Verstimmung der Magnetpolteilung durch eine Vergrößerung der Teilung der Pole 2 des Magneten 1 erreicht ist.

Mit der dargestellten Erregeranordnung läßt sich das Magnetgewicht wesentlich reduzieren, weil durch Vergrößerung der Magnetpolteilung die Pollücke verlängert wird und bei gegebenem Nutquerschnitt die Nuttiefe kleiner gewählt werden kann. Dadurch nimmt auch die Polstirnstreuung ab, so daß wegen der geringeren magnetischen Belastung des Eisenkreises der Eisenquerschnitt verkleinert werden kann. Da der Nutquerschnitt vollständig vom Spulenmaterial ausgefült ist, kann die Bauhöhe des Magneten 1 insgesamt verringert werden. Eine zusätzliche Reduzierung des Gewichtes ergibt sich aus den Ausnehmungen 6 unter den Polen 2 mit dem Vorteil, daß die mittlere Eisenweglänge des magnetischen Kreises unterhalb der Polebene 5 verkürzt und der magnetische Spannungsabfall verringert wird. Der thermische Übergangswiderstand zwischen den Magnetspule n und den Polen ist durch den engen Kontakt zwischen Magnetspule und Polwandung ebenfalls verringert, so daß die Verlustleistung vermehrt über das Magneteisen abgeführt werden kann. Das ermöglicht eine Erhöhung der Stromdichte bei gleichbleibendem oder verringertem Magnetgewicht.

**Patentansprüche**

1. Erregeranordnung, insbesondere für einen Synchron-Langstatorantrieb für Schnellverkehrssysteme mit kombinierter Erzeugung von Vortriebs- und Tragkräften, mit wenigstens einem Wechselpol-Magneten (1), der mehrere quer zur Langstatorrichtung verlaufende Nuten (4) aufweist, die an ihrer dem Langstator gegenüberliegenden Polebene (5) offen sind und zugeordnete Magnetspulen aufnehmen, deren Leiter um die zwischen benachbarten Nuten (4) befindlichen Pole (2) gelegt sind, dadurch gekennzeichet, daß die Nuten (4) einen sich bis zur Polebene (5) erstreckenden rechteckigen Querschnitt aufwei-

EP 0 156 013 B1

sen und unterhalb der Pole (2) parallel zu den Nuten (4) erstreckte Ausnehmungen (6) drart ausgebildet sind, daß der Magnet (1) einen mäanderförmigen Querschnitt besitzt, und daß die Leiter (10) der Magnetspulen (9) in engem Kontakt untereinander sowie zu den Nutwandungen (11) unmittelbar auf die Pole (2) aufgewickelt sind und aus Bändern (10) bestehen, deren Bandbreite der Tiefe der Nuten (4) entspricht.

2. Anordnung nach Anspruch 1, dadurch gekennzeichnet, daß die Leiter (10) der Magnetspulen (9) an den Endpolen (7, 8) jedes Magneten (1) um den Magnetrücken (3) gewickelt sind.

3. Anordnung nach Anspruch 1 oder 2 mit in zugeordneten Nuten der Pole eingelegten Lineargeneratorwicklungssträngen, dadurch gekennzeichnet, daß die Lineargeneratorwicklungsstränge (14) wenigstens teilweise in an den Nutwandungen (11) angeordneten Nuten (15) verlegt sind.

4. Anordnung nach einem der Ansprüche 1 bis 3, dadurch gekennzeichnet, daß Permanentmagnete (16) im Magnetrücken (3) unterhalb der Magnetspulen (9) oder in den Polen (2) neben den Magnetspulen (9) angeordnet sind.

5. Anordnung nach einem der Ansprüche 1 bis 4, dadurch gekennzeichnet, daß zur Unterdrückung des Einflusses de Nutung des Langstators die Magnetpolteilung gegenüber der Statorpolteilung vergrößert ist.

6. Anordnung nach einem der Ansprüche 1 bis 5, dadurch gekennzeichnet, daß metallische Platten (17) zwischen den Magnetpolen (2) und den Magnetspulen (9) angeordnet sind.

7. Anordnung nach Anspruch 6, dadurch gekennzeichnet, daß die metallischen Platten (17) elektrisch leitend mti den Magnetspulen (9) verbunden sind und die elektrische Isolation zwischen der metallischen Platte (17) und dem Magnetpol (2) angeordnet ist.

**Revendications**

1. Agencement d'excitation, notamment pour un entraînementsynchrone à stator long pour des systèmes de trafic rapide avec production combinée de forces de propulsion et de forces proteuses, comportant au moins un aimant (1) à poles alternés, qui présente plusieurs gorges (4) s'étendant transversalement au sens du stator long, lesquelles gorges sont ouvertes sur leur surface polaire (5) opposée au stator long et logent des bobines magnétiques associées, dont les conducteurs sont placés autour des pôles (2) se trouvant entre des gorges (4) voisines, caractérisé en ce que les gorges (4) ont une section transversale rectangulaire s'étendant jusqu'à la surface polaire (5) et en ce que des évidements (6) s'étendant en-dessous des pôles parallèlement aux gorges (4) sont réalisés de telle sorte que l'aimant (1) a une section transversale sinueuse et en ce que les conducteurs (10) des bobines magnétiques (9) sont enroulés en contact étroit l'un avec l'autre et avec les parois (11) des gorges, directement sur les pôles (2), et sont constitués de bandes (10) dont la largeur correspond à la profondeur des gorges (4).

2. Agencement selon la revendication 1, caractérisé en ce que les conducteurs (10) des bobines magnétiques (9) sont enroulés, aux extrémités polaires (7, 8) de chaque aimant (1), autour du dos (3) de l'aimant.

3. Agencement selon la revendication 1 ou 2, comportant des cordons d'enroulement de générateur linéaire placés dans des gorges correspondantes des pôles, caractérisé en ce que les cordons d'enroulement du générateur linéaire (14) sont placés au moins partiellement dans des gorges (15) prévues sur les parois de gorge (11).

4. Agencement selon l'une des revendications 1 à 3, caractérisé en ce que des aimants permanents (16) sont disposés dans le dos (3) de l'aimant en-dessous des bobines magnétiques (9) ou dans les pôles (2) à côté des bobines magnétiques (9).

5. Agencement selon l'une des revendications 1 à 4, caractérisé en ce que, pour supprimer l'influence du rainurage du stator long, l'écartement des pôles de l'aimant est plus grand que celui des pôles du stator.

6. Agencement selon l'une des revendications 1 à 5, caractérisé en ce que des plaques métalliques (17) sont disposées entre les pôles magnétiques (2) et les bobines magnétiques (9).

7. Agencement selon la revendication 6, caractérisé en ce que les plaques métalliques (17) sont reliées aux bobines magnétiques (9) en conduisant l'électricité et l'isolation électrique est placée entre la plaque métallique (17) et le pôle magnétique (2).

**Claims**

1. Exciter arrangement, especially for a synchronous linear motor for rapid transit systems with combined creation of propulsive and lift forces, with at least one alternating pole magnet (1), which has a plurality of grooves (4) running transverse to the linear stator direction, which are open at their pole plane (5) opposite to the linear stator and receive associated magnetic coils, whose conductors are disposed about the poles (2) located between adjacent grooves (4), characterized in that the grooves (4) have a rectangular cross-section extending up to the pole plane (5) and below the poles (2), extending parallel to the grooves (4), there are formed recesses (6) in such a way that the magnet (1) has a meandering cross-section, and in that the conductors (10) of the magnetic coils (9) are wound directly on the poles (2) in close contact with one another and with the groove walls (11) and consist of strips whose strip width corresponds to the depth of the grooves (4).

2. Arrangement according to claim 1, characterized in that the conductors (10) of the magnetic coils (9) on the end poles (7, 8) of each magnet (1) are wound round the back (3) of the magnet.

3. Arrangement according to claim 1 or 2 with linear generator coil strands fitted in associated grooves of the poles, characterized in that the linear generator coil strands (14) are disposed at least partially in grooves (15) arranged in the groove walls (11).

4. Arrangement according to one of claims 1 to 3, characterized in that permanent magnets (16) are arranged in the magnet back (3) below the magnetic coils (9) or in the poles (2) beside the magnetic coils (9).

5. Arrangement according to one of claims 1 to 4, characterized in that magnetic pole pitch is enlarged relative to the stator pole pitch to suppress the effect of the grooving of the linear stator.

6. Arrangement according to one of claims 1 to 5, characterized in that metal plates (17) are arranged between the magnetic poles (2) and the magnetic coils (9).

7. Arrangement according to claim 6, characterized in that the metal plates (17) are connected electrically to the magnetic coils (9) and the electrical insulation is arranged between the metal plate (17) and the magnetic pole (2).

FIG. 1

FIG. 2

FIG. 3